Europäisches Patentamt

European Patent Office

Office européen des brevets

(11) Veröffentlichungsnummer: **0 300 266 B1**

# (12) EUROPÄISCHE PATENTSCHRIFT

(45) Veröffentlichungstag der Patentschrift: **01.04.92**

(51) Int. Cl.⁵: **G01N 27/84**, G01N 27/85

(21) Anmeldenummer: **88110713.0**

(22) Anmeldetag: **05.07.88**

(54) **Vorrichtung zum Prüfen von metallischen Werkstücken.**

(30) Priorität: **08.07.87 DE 3722596**

(43) Veröffentlichungstag der Anmeldung:
**25.01.89 Patentblatt 89/04**

(45) Bekanntmachung des Hinweises auf die
Patenterteilung:
**01.04.92 Patentblatt 92/14**

(84) Benannte Vertragsstaaten:
**AT BE CH DE ES FR GB GR IT LI LU NL SE**

(56) Entgegenhaltungen:
DE-A- 2 552 985          DE-A- 3 026 540
DE-A- 3 145 090          DE-A- 3 150 303
DE-B- 2 725 816          GB-A- 1 602 643

(73) Patentinhaber: **Magfoil & Inspektionstechniken GmbH
Grootkoppel 29
W-2400 Lübeck(DE)**

(72) Erfinder: **Walther, Karl G.
Theodor-Heuss-Strasse 35
W-5840 Schwerte(DE)**
Erfinder: **Walther, Ronald G.
Rütscherstrasse 175
W-5100 Aachen(DE)**

(74) Vertreter: **von Hellfeld, Axel, Dipl.-Phys. Dr. et
al
Wuesthoff & Wuesthoff Patent- und Rechtsanwälte Schweigerstrasse 2
W-8000 München 90(DE)**

# Beschreibung

Die Erfindung betrifft eine Vorrichtung zum Prüfen von metallischen Werkstücken, insbesondere Schweißnähten mit einem Behälter, der eine Trägerfolie und eine Sichtfolie aufweist, zwischen denen Teilchen aus magnetisierbarem Material in einer Flussigkeit suspendierbar sind und sich in einem das zu prüfende Werkstück und die Suspension durchsetzenden Magnetfeld bei Fehlstellen in charakteristischer Weise anordnen.

Eine solche Vorrichtung ist aus der DE-PS 31 45 090 bekannt und dient insbesondere dem Auffinden von Fehlstellen in Schweißnähten unter Wasser. Der Behälter wird von einem Taucher derart auf die Schweißnaht gelegt, daß die durchsichtige Sichtfolie an der Schweißnaht anliegt und die Trägerfolie von ihr abgekehrt ist. Im Behälter wird dann eine Suspension der magnetisierbaren Teilchen einem Magnetfeld ausgesetzt, das auch die zu prüfende Schweißnaht durchsetzt. Sind in der Schweißnaht Fehlstellen, wie Risse, so bewirken diese eine Änderung des Verlaufs der Magnetfeldlinien, wodurch auch die Anordnung der magnetsierbaren Teilchen im Magnetfeld beeinflußt wird. Bei den Fehlstellen ordnen sich die Teilchen in einer für die Fehlstelle charakteristischen Weise an, so daß ein Fachmann Rückschlüsse auf die Art der Fehlstellen treffen kann.

Die in der für die Fehlstellen charakteristischen Weise angeordneten Teilchen werden in ihrer Stellung dadurch fixiert, daß die Suspension eine Zustandsänderung erfährt, z. B. eine Änderung ihrer Viskosität, wie insbesondere eine Verkieselung, so daß die Teilchen ihre Lage im Behälter nicht mehr wesentlich ändern.

Die zu untersuchenden Schweißnähte verlaufen in der Regel nicht geradlinig, sondern gekrümmt, so daß auch die auf die Schweißnähte aufgelegten flachen Behälter nach der Zustandsänderung (Viskositätsänderung oder Verkieselung) ebenfalls gekrümmt sind. Beim Stand der Technik war es erforderlich, die Behälter in dieser gekrümmten Form zu belassen und die Auswertung in diesem Zustand vorzunehmen. Eine Glättung der Behälter nach der Abnahme von der untersuchten Schweißnaht hatte in der Regel eine Zerstörung oder zumindest eine Beeinträchtigung der charakteristischen Anordnung der Teilchen zur Folge.

Sollten bei der bekannten Vorrichtung deshalb die für die Fehlstellen charakteristischen Strukturen der Teilchen auf Papier kopiert werden, so war es erforderlich, die gekrümmten Behälter mit einer Kamera aufzunehmen und aus den Abbildungen Papier-Abzüge herzustellen.

Aus der GB-A-1 602 643 ist eine Vorrichtung zum Prüfen von metallischen Werkstücken mit einem Behälter, in dem magnetisierbare Teilchen in einer Flüssigkeit suspendiert sind, bekannt, bei der die magnetischen Teilchen zur Untersuchung chemisch "eingefroren" werden. Hierzu wird eine Kapsel gebrochen, die die Flüssigkeit in dem Behälter polymerisiert oder in anderer Weise eine Viskositätsänderung in der Flüssigkeit hervorruft.

Der Erfindung liegt die Aufgabe zugrunde, eine gattungsgemäße Vorrichtung zum Prüfen von metallischen Werkstücken derart weiterzubilden, daß bei einfacher Herstellung eine sichere und zuverlässige Auswertung der Prüfergebnisse ermöglicht ist.

Bei einer Vorrichtung der eingangs genannten Art wird diese Aufgabe erfindungsgemäß dadurch gelöst, daß zwischen der Sichtfolie und der Trägerfolie ein Netz angeordnet ist.

Das erfindungsgemäß vorgesehene Netz aus feinfädrigem Kunststoff bewirkt, daß die Teilchen nach ihrer Ausrichtung und Sammlung im Magnetfeld in der eingenommenen Position verbleiben und bei der sich an die Messung anschließenden Handhabung des Behälters ihre Lage nicht mehr ändern. Die zunächst flüssige Suspension mit den im Magnetfeld ausgerichteten Teilchen verwandelt sich durch die genannte Zustandsänderung in eine weitgehend erstarrte (d. h. nicht mehr flüssige) "Trägermasse", für die das erfindungsgemäß vorgesehene Kunststoffnetz eine Stütze ist. Das Kunststoffnetz ist elastisch (wie z. B. ein Nylonstrumpf) und hält die Teilchen mitsamt der sie umgebenden Trägermasse am Ort fest.

Das erfindungsgemäße Kunststoffnetz wird im Behälter dicht unterhalb der Sichtfolie eingeschweißt. Es behindert die Auswertung des Teilchen-Bildes nicht.

In einer bevorzugten Ausgestaltung der erfindungsgemäßen Vorrichtung ist vorgesehen, daß zwischen dem Netz und der Trägerfolie zwei Kammern angeordnet sind, von denen eine eine Flüssigkeit enthält, in welcher die Teilchen aus magnetisierbarem Material suspendiert werden, während die andere Kammer eine Substanz, wie insbesondere eine Flüssigkeit enthält, die der Suspension zusetzbar ist und dort eine Zustandsänderung bewirkt, so daß die Teilchen sich nicht mehr vom eingenommenen Ort wegbewegen können.

In einer bevorzugten Ausgestaltung der Erfindung sind die Teilchen aus magnetisierbarem Material zu einer im wesentlichen gasfreien Tablette gepreßt und zwischen dem Netz und der Sichtfolie angeordnet.

Um zu prüfen, ob die Suspension der Teilchen bei der Prüfung einem hinreichend starken Magnetfeld ausgesetzt war, ist in einer bevorzugten Ausgestaltung der erfindungsgemäßen Vorrichtung ein insbesondere als Dreieck geformter Draht aus einem Material mit möglichst geringem Eigenmagnetismus zwischen der Sichtfolie und dem zu prüfenden Werkstück angeordnet.

Da das erfindungsgemäß vorgesehene Netz nahe der Sichtfolie angeordnet ist, liegt nach der Durchführung einer Prüfung der Hauptteil der erstarrten Trägermasse zwischen dem Netz und der Trägerfolie. In einer bevorzugten Weiterbildung der Erfindung wird diese Trägermasse dadurch an ihrem Ort stabilisiert, daß eine Vielzahl von aufgekräuselten (z.B. wendelförmigen) Fasern dem Pulver beigemischt ist. Die Fasern haben z.B. eine Länge von etwa 25 mm und stabilisieren die umgebende Trägermasse gegen Reißen und Zerbröckeln.

Der erfindungsgemäße Behälter kann nach Durchführung der Messung zwischen zwei planparallelen Platten aus nicht-magnetischem Material flachgepreßt werden, ohne daß die geordnete Struktur der magnetisierten Teilchen zerstört wird. Die flachgepreßten Behälter können auf einen Kopierer gelegt werden, um die Teilchen-Strukturen direkt abzulichten.

Nachfolgend wird ein Ausführungsbeispiel der Erfindung anhand der Zeichnung näher erläutert. Es zeigt:

Fig. 1 eine schematische Darstellung einer Vorrichtung zum Prüfen von metallischen Werkstücken,

Fig. 2 einen Schnitt entlang der Linie I-II der Fig. I,

Fig. 3 einen Schnitt entlang der Linie III-IV der Fig. 1.

Fig. 4 ein Werkstück mit aufgelegtem Behälter gemäß dem Stand der Technik,

Fig. 5 ein Werkstück mit aufgelegtem Behälter gemäß der Erfindung, und

Fig. 6 einen erfindungsgemäßen Behälter in flachem Zustand.

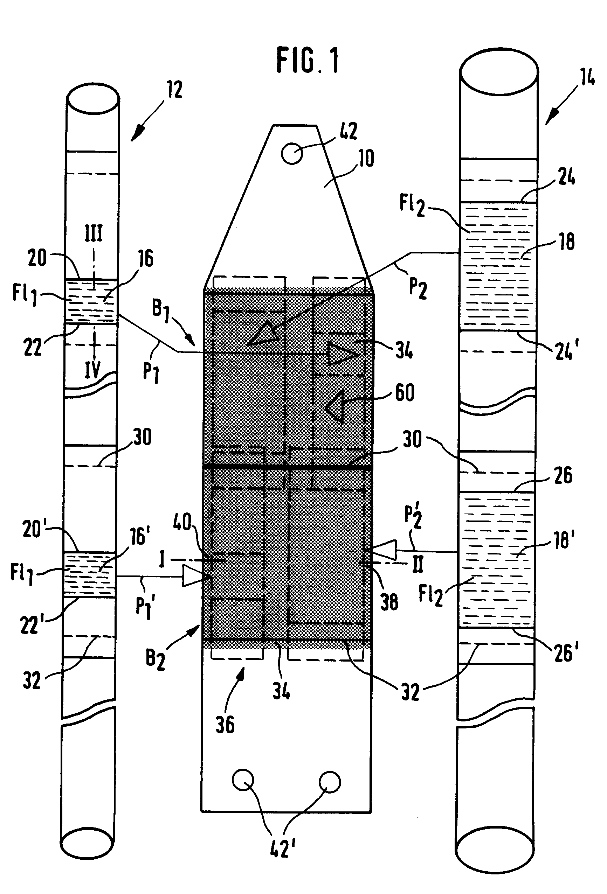

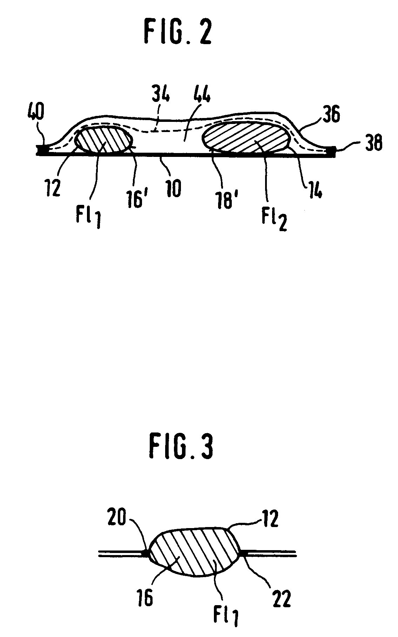

Fig. 1 zeigt eine Trägerfolie 10 aus Kunststoff sowie zwei Schläuche 12 und 14, ebenfalls aus Kunststoff. In den in Fig. 1 links bzw. rechts von der Trägerfolie 10 gezeichneten Schläuchen 12 bzw. 14 sind Flüssigkeitskammern 16, 16', 18, 18' ausgeformt (siehe auch Fig. 3). Durch geschweißte oder geklebte Nähte 20, 20', 22, 22', 24, 24', 26 und 26' sind in den beiden Schläuchen 12 bzw. 14 die einzelnen Kammern abgetrennt.

In den Kammern 16, 16' ist jeweils eine Flüssigkeit $Fl_1$ enthalten. Beim dargestellten Ausführungsbeispiel ist die Flüssigkeit $Fl_1$ entionisiertes Wasser. In den Kammern 18, 18' ist eine alkalische Lösung von Nesosilikaten enthalten.

Bei der Herstellung der gebrauchsfertigen Vorrichtung zum Prüfen von metallischen Werkstücken werden die in den Schläuchen 12 bzw. 14 ausgebildeten Kammern 16, 16' 18, 18' gemäß den Pfeilen $P_1$, $P_{1'}$, $P_2$ bzw. $P_2$, auf der Trägerfolie 10 positioniert.

Gemäß den Fig. 1 und 2 wird über die auf der Trägerfolie 10 angeordneten Kammern 16, 16', 18, 18' ein durchgehendes Netz aus Kunststoff gelegt und über das Netz eine durchsichtige Sichtfolie 36, ebenfalls aus Kunststoff. Sodann werden gemäß den Fig. 1 und 2 die Trägerfolie 10, das Netz 34 und die Sichtfolie 36 entlang den Schweißnähten 38 und 40 miteinander verbunden. Die Kammern 16, 16', 18, 18' sind ebenfalls durch Schweißung oder Klebung an überstehenden Schlauchabschnitten mit der Trägerfolie 10 verbunden.

Weiterhin werden zwischen der Sichtfolie 36 und dem Netz 34 benachbart den das entionisierte Wasser enthaltenden Kammern 16, 16' jeweils gepreßte und evakuierte Tabletten aus einem Carbonyleisen, Zinkoxid und weißen Zement enthaltenden Pulver angeordnet (nicht gezeigt).

Gemäß Fig. 1 werden auf der Trägerfolie 10 durch die Schweißnaht 30 getrennt zwei Behälter $B_1$, $B_2$ gebildet, die jeweils eine Kammer mit der Flüssigkeit $Fl_1$, eine Kammer mit der Flüssigkeit $Fl_2$ und die Tablette enthalten.

Wie Fig. 1 zu entnehmen ist, sind in den beiden benachbarten und durch die Schweißnaht 30 getrennten Behältern $B_1$, $B_2$ die Kammern mit den unterschiedlichen Flüssigkeiten $Fl_1$ und $Fl_2$ "kreuzweise" angeordnet, d. h. in dem oberen Behälter $B_1$ ist die Kammer 18 gemäß dem Pfeil $P_2$ links und die Kammer 16 gemäß dem Pfeil $P_1$ rechts angeordnet, während in dem Behälter $B_2$ unterhalb der Schweißnaht 30 die Kammern 16' und 18' gemäß den Pfeilen $P_1$, bzw. $P_2$, links bzw. rechts angeordnet sind.

Zur Durchführung der Prüfung einer Schweißnaht auf Risse oder andere Fehlstellen wird die Trägerfolie vom Taucher unter Wasser derart auf die zu untersuchende Schweißnaht gelegt, daß die Sichtfolie 36 direkt an der Schweißnaht anliegt, also die Trägerfolie 10 von der Schweißnaht abgekehrt ist. Zuvor hat der Taucher die entionisiertes Wasser $Fl_1$ enthaltenden Kammern 16, 16' mechanisch durch Druck zum Platzen gebracht, so daß sich in der Hauptkammer 44 (Fig. 2), die zwischen der Trägerfolie 10 und der Sichtfolie 36 gebildet ist, die Pulver-Tablette im entionisierten Wasser auflöst.

Sodann legt der Taucher in an sich bekannter Weise eine Magnetisierungseinrichtung derart an das zu prüfende Werkstück an, daß ein Magnetfeld sowohl die zu untersuchende Schweißnaht als auch die Suspension der Teilchen aus magnetisierbarem Material (hier: Carbonyleisen) durchsetzt. Die Teilchen ordnen sich im Magnetfeld an und bilden bei Fehlstellen charakteristische Strukturen, wie Rillen, Häufungen etc., welche vom Fachmann später analysiert werden können.

Da in der Suspension aus entionisiertem Wasser und der Zinkoxid, weißen Zement und Carbonyleisen enthaltenden Pulvermischung noch keine Viskositätsänderung eintritt, sind die Pulverteilchen frei beweglich und können sich im Magnetfeld sehr schnell, z. B. innerhalb einer Sekunde, ausrichten. Der Taucher unterliegt beim Anbringen der Trägerfolie über der Schweißnaht und beim Positionieren des Magnetisierungsgerätes keinerlei zeitlichen Einschränkungen. Erst wenn diese Arbeiten abgeschlossen sind, öffnet der Taucher durch Druck die Kammern 18, 18′, so daß die Flüssigkeit Fl$_2$, also die alkalische Lösung aus Nesosilikaten, in die Suspension eindringt und dort eine Zustandsänderung hervorruft, aufgrund derer die ausgerichteten Teilchen aus magnetisierbarem Material in ihrer für eventuell vorhandene Fehlstellen charakteristischen Lage fixiert werden. Der Taucher kann die Kammern 18, 18′ auch anders als durch mechanischen Druck öffnen, nämlich z.B. durch dünne, elektrisch heizbare Drähte, welche den Behälter so durchsetzen, daß die Wände der Kammern 18, 18′ bei Erhitzung des oder der Drähte schmelzen und dabei die Kammern öffnen. Das Kunststoffnetz 34 fördert die Fixierung der Teilchen, so daß nach der Zustandsänderung in der Suspension (hier: eine Verkieselung) die Trägerfolie 10 von der untersuchten Schweißnaht abgenommen und an Deck gebracht werden kann, ohne daß die charakteristische Anordnung der Teilchen gestört wird.

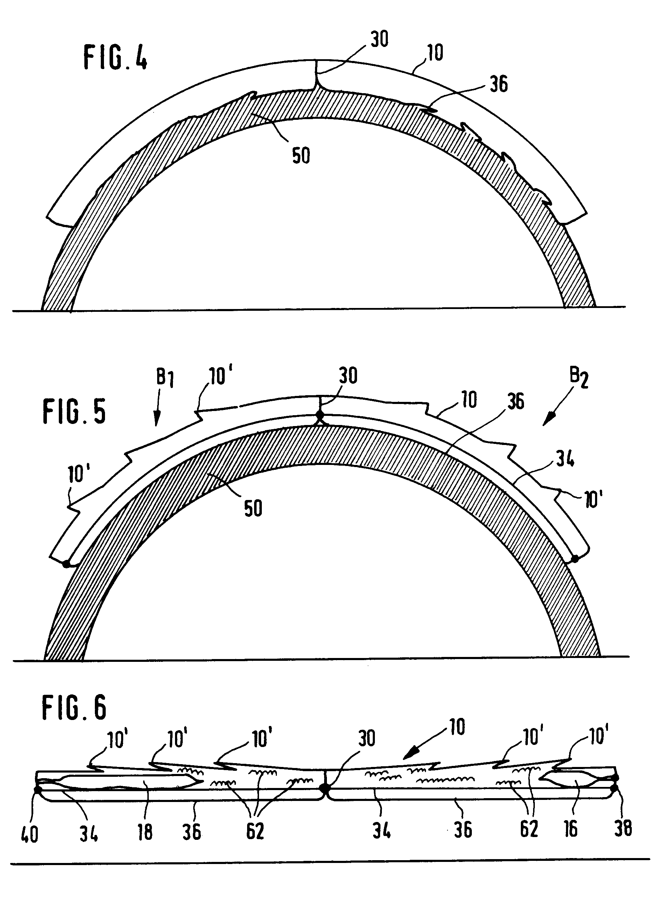

Fig. 4 zeigt ein rohrförmiges Werkstück (z. B. das Teil einer Unterwasser-Pipeline) auf welches eine herkömmliche Vorrichtung zum Prüfen der Schweißnaht mittels magnetisierbarer Teilchen (DE-PS 31 45 090) aufgelegt ist. Die Sichtfolie 36 liegt direkt auf der Schweißnaht. Wie in Fig. 4 dargestellt ist, wirft die Sichtfolie 36 aufgrund der Krümmung des Werkstückes 50 Falten. Diese Falten können bei der späteren Auswertung des Prüfergebnisses störend wirken.

Die Fig. 5 und 6 zeigen eine verbesserte Ausführungsform der Behälter B$_1$ und B$_2$, bei der die Sichtfolie 36 auch bei konvex gekrümmten Werkstücken keine Falten wirft. Hierzu ist gemäß den Fig. 5 und 6 die Trägerfolie 10 im flachen Zustand des Behälters (Fig. 6) mit Falten 10′ versehen, die beim Auflegen der Behälter B$_1$, B$_2$ auf die Schweißnaht gestreckt werden, so daß die Sichtfolie 36 glatt bleibt.

Weiterhin sind gemäß Fig. 6 zwischen dem Netz 34 und der Trägerfolie 10 gekräuselte Fasern 62 von ca. 25 mm Länge angeordnet, die ebenfalls die erstarrte Trägermasse stabilisieren, so daß bei der sich an die Messung anschließenden Verarbeitung die Teilchenstrukturen nicht beeinträchtigt werden.

**Patentansprüche**

1. Vorrichtung zum Prüfen von metallischen Werkstücken, insbesondere Schweißnähten, mit einem Behälter (B$_1$, B$_2$), der eine Trägerfolie (10) und eine Sichtfolie (36) aufweist, zwischen denen Teilchen aus magnetisierbarem Material in einer Flüssigkeit suspendierbar sind und sich in einem das zu prüfende Werkstück (50) und die Suspension durchsetzenden Magnetfeld bei Fehlstellen in charakteristischer Weise anordnen und dort durch eine Zustandsänderung in der Flüssigkeit fixiert werden, dadurch **gekennzeichnet,** daß zwischen der Sichtfolie (36) und der Trägerfolie (10) ein Netz (34) angeordnet ist.

2. Vorrichtung nach Anspruch 1, dadurch **gekennzeichnet,** daß zwischen dem Netz (34) und der Trägerfolie (10) zumindest eine Kammer (16, 16', 18, 18') zur Aufbewahrung von Flüssigkeit (Fl$_1$, Fl$_2$) vorgesehen ist.

3. Vorrichtung nach einem der Ansprüche 1 oder 2, dadurch **gekennzeichnet,** daß zwischen dem Netz (34) und der Trägerfolie (10) in jedem Behälter (B$_1$, B$_2$) zwei Kammern (16, 16', 18, 18') vorgesehen sind, von denen eine (16, 16') die Flüssigkeit (Fl$_1$) und die andere (18, 18') eine Substanz (Fl$_2$) enthält, welche der Flüssigkeit zusetzbar ist und eine Viskositätsänderung bewirkt.

4. Vorrichtung nach einem der vorhergehenden Ansprüche, dadurch **gekennzeichnet,** daß zwischen dem Netz (34) und der Sichtfolie (36) ein die Teilchen aus magnetisierbarem Material enthaltendes Pulver, vorzugsweise in Form einer gepreßten Tablette, angeordnet ist.

5. Vorrichtung nach einem der vorhergehenden Ansprüche, dadurch **gekennzeichnet,** daß zwischen der Sichtfolie (36) und dem zu prüfenden Werkstück (5) ein als Dreieck geformter Draht (60) aus einem Material mit möglichst geringem Eigenmagnetismus angeordnet ist.

6. Vorrichtung nach einem der vorhergehenden Ansprüche, dadurch **gekennzeichnet,** daß die Trägerfolie (10) im Lagerzustand Faltungen (10') aufweist.

7. Vorrichtung nach einem der vorhergehenden Ansprüche, dadurch **gekennzeichnet,** daß zumindest zwischen dem Netz und der Trägerfolie (10) eine Mehrzahl von wendelförmigen Fasern (62) vorgesehen sind.

8. Vorrichtung nach einem der vorhergehenden Ansprüche,
dadurch **gekennzeichnet,**
daß das Netz (34) aus feinfädrigem Kunststoff besteht.

9. Vorrichtung nach Anspruch 3,
dadurch **gekennzeichnet,**
daß die Kammern (16, 16', 18, 18') durch schlauchförmige Kissen gebildet sind.

10. Vorrichtung nach einem der vorhergehenden Ansprüche,
dadurch **gekennzeichnet,**
daß jeweils zumindest zwei Behälter ($B_1$, $B_2$) auf einer gemeinsamen Trägerfolie (10) ausgeformt sind, wobei Kammern (16, 16') mit gleicher Flüssigkeit bzw. Substanz in benachbarten Behältern auf gegenüberliegenden Seiten angeordnet sind.

11. Vorrichtung nach Anspruch 10,
dadurch **gekennzeichnet,**
daß die Trägerfolie (10) an ihren Enden mit unterschiedlichen Markierungen, wie Löchern (42, 42') in unterschiedlicher Anzahl, versehen ist.

12. Verfahren zum Prüfen von metallischen Werkstücken mittels einer Vorrichtung gemäß einem der Ansprüche 1 bis 11,
dadurch **gekennzeichnet,**
daß der oder die Behälter ($B_1$, $B_2$) nach Durchführung der Prüfung zur Analyse zwischen zwei parallelen Platten aus nicht-magnetischem Material gepreßt wird bzw. werden.

**Claims**

1. Apparatus for testing metallic workpieces, especially weld seams, comprising a container ($B_1$, $B_2$) having a support sheet (10) and a viewing sheet (36) between which particles of magnetizable material can be suspended in a liquid and in a magnetic field passing through the workpiece (50) to be tested and the suspension arrange themselves in characteristic manner in the presence of faults,
characterized in
that between the viewing sheet (36) and the support sheet (10) a net (34) is disposed.

2. Apparatus according to claim 1,
characterized in
that between the net (34) and the support sheet (10) at least one chamber (16, 16', 18, 18') is provided for storing liquid ($Fl_1$, $Fl_2$).

3. Apparatus according to any one of claims 1 or 2,
characterized in
that between the net (34) and the support sheet (10) in each container ($B_1$, $B_2$) two chambers (16, 16', 18, 18') are provided, of which one (16, 16') contains the liquid ($Fl_1$) and the other (18, 18') a substance ($Fl_2$) which can be added to the liquid and effects a viscosity change.

4. Apparatus according to any one of the preceding claims,
characterized in
that between the net (34) and the viewing sheet (36) a powder containing the particles of magnetizable material is arranged, preferably in the form of a compression-molded pellet.

5. Apparatus according to any one of the preceding claims,
characterized in
that between the viewing sheet (36) and the workpiece (5) to be tested a wire (60) shaped as triangle and consisting of a material with the smallest possible self-magnetism is arranged.

6. Apparatus according to any one of the preceding claims,
characterized in
that the support sheet (10) comprises folds (10') in the storing state.

7. Apparatus according to any one of the preceding claims,
characterized in
that at least between the net and the support sheet (10) a plurality of spiral-shaped fibres (62) is provided.

8. Apparatus according to any one of the preceding claims,
characterized in
that the net (34) consists of fine-filament plastic.

9. Apparatus according to claim 3,
characterized in
that the chambers (16, 16', 18, 18') are formed by hose-like cushions.

10. Apparatus according to any one of the preceding claims,
characterized in
that in each case at least two containers ($B_1$, $B_2$) are formed on a common support sheet (10), chambers (16, 16') with identical liquid or substance being arranged in adjacent containers on opposite sides.

11. Apparatus according to claim 10, characterized in that the support sheet (10) is provided at its ends with different markings, such as holes (42, 42') in a different number.

12. Method for testing metallic workpieces by means of an apparatus according to any one of claims 1 to 11, characterized in that the container or containers (B$_1$, B$_2$) after carrying out the method is or are pressed between two parallel plates of non-magnetic material for the analysis.

**Revendications**

1. Dispositif de vérification de pièces métalliques, en particulier de cordons de soudure, avec un réservoir (B$_1$, B$_2$) qui présente une feuille porteuse (10) et une feuille d'examen (36) entre lesquelles des particules de matériau magnétisable peuvent être mises en suspension dans un liquide et, dans un champ magnétique traversant la pièce (50) et la suspension, se disposent en cas de défauts d'une manière caractéristique, et y sont immobilisées par un changement d'état dans le liquide, **caractérisé en ce que** un réseau (34) est placé entre la feuille d'examen (36) et la feuille porteuse (10).

2. Dispositif selon la revendication 1 **caractérisé en ce que** entre le réseau (34) et la feuille porteuse (10) est prévue au moins une chambre (16, 16', 18, 18') est destinée à la conservation d'un liquide (Fl$_1$, Fl$_2$).

3. Dispositif selon l'une des revendications 1 ou 2. **caractérisé en ce que** entre le réseau (34) et la feuille porteuse (10), deux chambres (16, 16', 18, 18') sont prévues dans chaque réservoir (B$_1$, B$_2$), l'une d'elles (16, 16') contenant un liquide (Fl$_1$) et l'autre (18,18') contient une substance (Fl$_2$) qui peut être additionnée au liquide et qui y effectue une modification de la viscosité.

4. Dispositif selon l'une des revendications précédentes. **caractérisé en ce que** entre le réseau (34) et la feuille d'examen (36) est placée une poudre contenant les particules de matériau magnétisable, de préférence sous la forme d'une plaquette comprimée.

5. Dispositif selon l'une des revendications précédentes, **caractérisé en ce que** entre la feuille d'examen (36) et la pièce à vérifier (5) est placé un fil (60) mis en forme de triangle, en un matériau possédant le magnétisme propre le plus petit possible.

6. Dispositif selon l'une des revendications précédentes, **caractérisé en ce que** la feuille porteuse (10) présente des plis (10') dans son état d'entreposage.

7. Dispositif selon l'une des revendications précédentes, **caractérisé en ce que** au moins entre le réseau et la feuille porteuse (10) un ensemble de fibres de forme ondulée (62) est prévu.

8. Dispositif selon l'une des revendications précédentes, **caractérisé en ce que** le réseau est constitué d'un matériau synthétique en fines fibres.

9. Dispositif selon la revendication 3, **caractérisé en ce que** les chambres (16, 16', 18, 18') sont formées par des coussins en forme de manchons.

10. Dispositif selon l'une des revendications précédentes, **caractérisé en ce que** au moins deux récipients (B$_1$, B$_2$) sont formés sur une feuille porteuse commune, tandis que les chambres (16, 16') contenant le même liquide ou la même substance sont disposées dans des réservoirs voisins sur leur face opposée.

11. Dispositif selon la revendication 10, **caractérisé en ce que** la feuille porteuse (10) est dotée à ses extrémités de marquages différents, comme des trous (42, 42') en nombres différents.

12. Procédé de vérification de pièces métalliques à l'aide d'un dispositif selon l'une des revendications 1 à 11, **caractérisé en ce que** après exécution de la vérification en vue d'une analyse le ou les réservoirs(B$_1$, B$_2$) sont com-

primés entre deux plaques parallèles en matériau non magnétique.

# FIG.1

# FIG. 2

# FIG. 3

FIG.4

30

10

36

50

FIG.5

B₁

10'

30

10

36

B₂

34

10'

50

10'

FIG.6

10'   10'   10'   30   10   10'   10'

40   34   18   36   62   34   36   62   16   38